# EUROPEAN PATENT APPLICATION

(11) **EP 3 012 792 A1**
(43) Date of publication of application: **27.04.2016**
(21) Application number: 15189984.6
(22) Date of filing: 15.10.2015
(51) Int. Cl.: G06Q 20/20, G06Q 20/18, G07G 1/00, G07F 17/32, G06Q 20/04

(54) **DESK-TOP INFORMATION PROCESSING APPARATUS**

(30) Priority: 23.10.2014 US 201414521725
(71) Applicant: Toshiba TEC Kabushiki Kaisha, Tokyo 141-0032 (JP)
(72) Inventor: TSUCHIMOTO, Hiroshi, Shinagawa-ku, Tokyo 141-0032 (JP)
(74) Representative: Takeuchi, Maya

(57) **Abstract**

In accordance with one embodiment, a desk-top information processing apparatus comprises a touch panel display, a reading section and a control section. The touch panel display positions a display screen thereof on the upper surface of a top plate of the desk-top information processing apparatus. The reading section reads the information recorded in a card. The control section controls the display and the operation of the touch panel display. The control section controls whether or not to proceed to a settlement processing based on the card information acquired by the reading section.

## Description

### FIELD

Embodiments described herein relate to an information processing apparatus provided with a touch panel display.

### BACKGROUND

In recent years, a touch panel display has been used as a user interface in a portable terminal device or a notebook computer. Further, a desk-top information sharing system which is provided with a large touch panel display and is capable of carrying out a multi-person meeting is being developed.

Conventionally, the information sharing system for giving a proposal to customers or carrying out a negotiation and a settlement system (for example, a system including a card reader) for carrying out a payment processing and the like when a negotiation is finalized are arranged separately. Thus, when carrying out the settlement processing, the users need to move from the place where the negotiation is carried out to another place.

### DESCRIPTION OF THE DRAWINGS

Fig. 1 is a diagram illustrating an example of the constitution of a system according to an embodiment;
Fig. 2 is a perspective view illustrating an example of the constitution of a desk-top information processing apparatus according to the embodiment;
Fig. 3 is a perspective view illustrating a state in which a converter is arranged on an antenna;
Fig. 4 is a block diagram illustrating an example of the constitution of the converter and the desk-top information processing apparatus;
Fig. 5 is a block diagram illustrating an example of the internal constitution of a control section;
Fig. 6 is a flowchart illustrating an example of operations carried out in the desk-top information processing apparatus;
Fig. 7 is a diagram illustrating an example of the display on a touch panel display when a polarization filter is used; and
Fig. 8 is a diagram illustrating a state in which a blindfold hood is used.

### DETAILED DESCRIPTION

In accordance with one embodiment, a desk-top information processing apparatus comprises a touch panel display, a reading section and a control section. The touch panel display positions a display screen thereof on the upper surface of a top plate of the desk-top information processing apparatus. The reading section reads the information recorded in a card. The control section controls the display and the operation of the touch panel display. The control section controls whether or not to proceed to a settlement processing based on the card information acquired by the reading section.

In a system according to the embodiment, if a negotiation is finalized, a settlement processing can be carried out on the spot using credit card or electronic money. Further, in the system according to the embodiment, each business form, such as a usage details or a receipt for proving the transaction and a delivery specification, can be passed to a customer on the spot, and a document of the scheduled arrival date and the like in a case of shipping at a later date can be given on the spot.

Preferably, the control section controls to display, on the touch panel display, a screen for inputting authentication information corresponding to the card information acquired from the reading section, determine whether or not it is proper using the authentication information acquired from the touch panel display and the card information, and proceed to a settlement processing of the purchased commodity if it is determined to be proper.

Preferably, the reading section includes an antenna positioned on the upper surface of the top plate and a converter which is arranged on the antenna to read the card information when a card is contacted with a reading port of the converter.

Preferably, the control section determines whether or not the converter is a pre-registered converter based on a code pre-registered in the converter and a code pre-registered in the desk-top information processing apparatus.

Preferably, the reading section includes an antenna positioned on the upper surface of the top plate, and reads the information of a card positioned on the antenna.

Preferably, the reading section is a card reader which reads the card information when a card is contacted with the reading port.

Preferably, the touch panel display polarizes and displays a display area including the screen for inputting the authentication information so that the display area can only be seen clearly by a user inputting the authentication information and cannot be seen from other directions.

Preferably, the control section outputs a slip image relating to the settlement processing to an image forming apparatus.

Preferably, the touch panel display displays, if the authentication information is a password number, a keyboard on which single digits are arrayed randomly on the screen.

Preferably, the touch panel display displays, if the authentication information is a signature, a column for inputting a signature.

The above, and the other objects, feature and advantages of the present invention will be made apparent from the following description of the preferred embodiments, given as non-limiting examples with reference to the accompanying drawings.

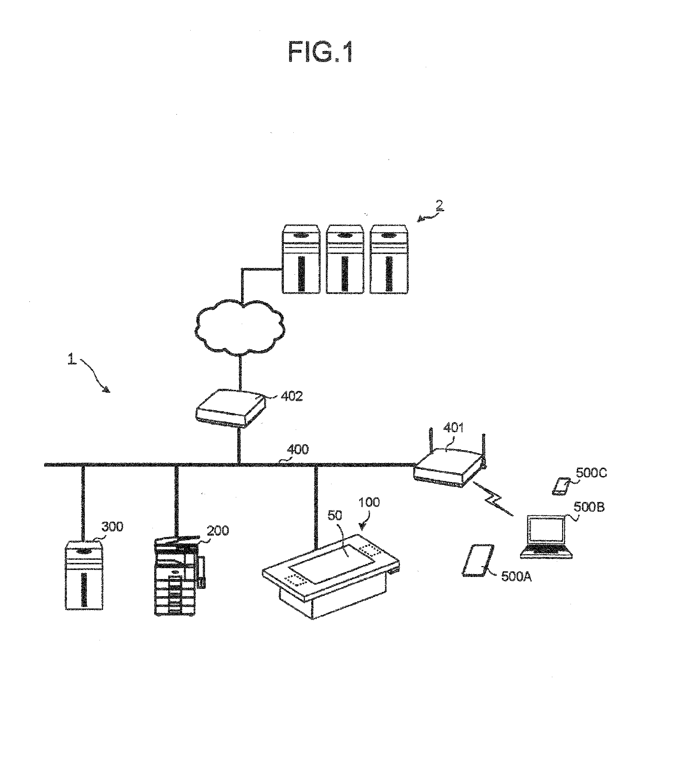

Fig. 1 is a schematic diagram illustrating the system constitution of the embodiment. A system 1 according to the embodiment includes a desk-top information processing apparatus 100, a MFP (Multifunction Peripheral) 200 and a store server 300 among which data transmission/reception can be carried out through a network 400. A wireless LAN access point 401 is connected with the network 400, and through the access point 401 and the network 400, an access from a terminal such as a tablet type terminal 500A, a notebook terminal 500B, a portable terminal 500C and the like to the apparatuses inside the system 1 is allowed. Further, the network 400 includes a router 402 for carrying out communication control with an external settlement system 2, and the desk-top information processing apparatus 100 carries out data transmission/reception with the settlement system 2 through the router 402.

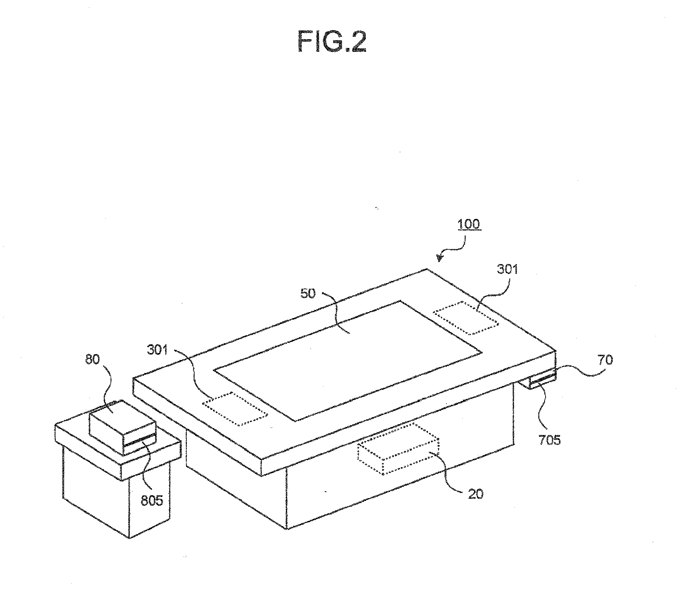

The desk-top information processing apparatus 100 has a flat top plate surface on which a negotiation between a shop clerk and a customer can be carried out, and a touch panel display 50 is arranged on the top plate surface. Fig. 2 is a perspective view illustrating the appearance of the desk-top information processing apparatus 100 and one part inside the desk-top information processing apparatus 100 according to the embodiment. The desk-top information processing apparatus 100, which is a table type (desk-top) information processing apparatus, is provided with the large touch panel display 50 on the flat top plate surface for operation and display. With the touch panel display 50, the desk-top information processing apparatus 100 can be used by a plurality of users at the same time.

The desk-top information processing apparatus 100 further includes a control section 20, a card reader 70 and an antenna 301. The card reader 70 reads a magnetic card or a contact-type IC card which is held by a customer and issued by a bank or a credit company for settlement. The magnetic card and the contact-type IC card are referred to as contact-type cards. The card reader 70 has a reading port 705, and if the reading surface of the contact-type card is physically contacted with the reading port 705, the card reader 70 reads the information recorded in the contact-type card. The reading port 705 may be endowed with a mark indicating the contact position. Though the card reader 70 is positioned under top plate at the side of the shop clerk in the present embodiment, the present invention is not limited to this.

The antenna 301 reads a contactless-type IC card which is held by the customer and issued by a bank or a credit company. There are two antennas 301 arranged on the top plate surface of the desk-top information processing apparatus 100 at two sides of the touch panel display 50 in the present embodiment. The antennas 301 are energized in order so that the electric wave thereof will not interfere and the positions thereof can be determined. The antenna 301 may be of a rectangular shape or an arc shape. If the contactless-type card is held over the antenna 301, the desk-top information processing apparatus 100 acquires the information recorded in the card in a contactless manner.

The control section 20 is a computer system for uniformly controlling the touch panel display 50, the antenna 301, the card reader 70 and the like.

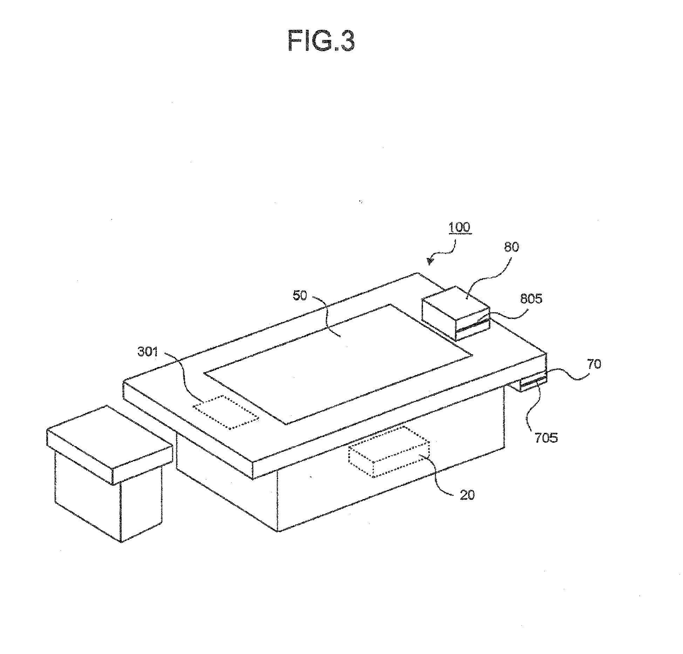

In a case where the settlement card presented by the customer is a contact-type card, a card reading processing is carried out using the card reader 70. Further, as shown in Fig. 3, by arranging a converter 80 on the antenna 301, it is also possible to read the information of the contact-type card through the converter 80. The converter 80 is a conversion unit which is provided with a reading port 805 for reading a contact-type card, and sends the information read from the contact-type card to the antenna 301. The reading port 805 may be endowed with a mark indicating the contact position.

The user brings the converter 80 closer to the upper portion of the antenna 301, or arranges the converter 80 on the antenna 301. The user physically contacts the reading surface of the contact-type card with the reading port 805. In this way, the desk-top information processing apparatus 100 acquires the information of the contacted card through the antenna 301. In addition, in a case where the converter 80 is often used to read the contact-type card, or in a case where only the contactless-type card is dealt with, a constitution without the card reader 70 is also applicable.

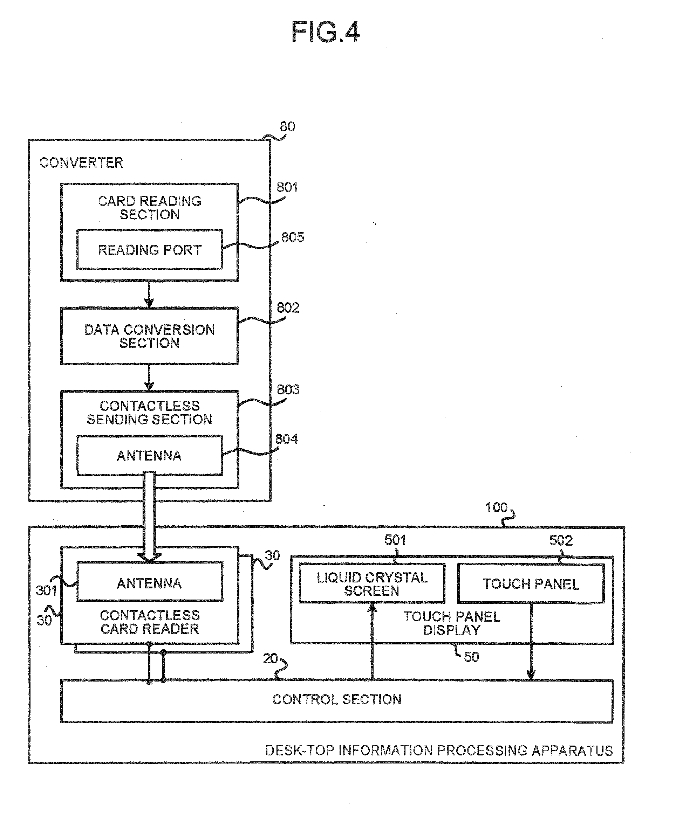

Fig. 4 is a block diagram illustrating an example of the constitution of the converter 80 and the desk-top information processing apparatus 100. In the example shown in Fig. 4, a constitution without the card reader 70 is shown.

The converter 80 comprises a card reading section 801, a data conversion section 802 and a contactless sending section 803. Each of these units may be constituted by a semiconductor chip provided with a processor, a RAM, a ROM and the like, or be partially or completely constituted by an ASIC (Application specific integrated circuit).

The card reading section 801 is a unit including the reading port 805 for physically contacting with the contact-type card presented by the customer. The data conversion section 802 converts the acquired card information from the data array of the contact card into the data array of the contactless card. The contactless sending section 803 is a unit which includes a coiled antenna 804 and sends, through the antenna 804, the data of which the data array is converted to the desk-top information processing apparatus 100 in a contactless manner.

The desk-top information processing apparatus 100 includes the control section 20, a contactless card reader 30 and the touch panel display 50. The contactless card reader 30 includes the aforementioned antenna 301, and reads the contactless card through the antenna 301 to acquire the card information. Further, the contactless card reader 30 acquires the card information sent from the converter 80. There are two contactless card readers 30 in the present embodiment which are energized in an alternated manner at a specific period. That is, if one contactless card reader 30 is being energized, the other contactless card reader 30 is not energized. Such a control is carried out repeatedly. The control section 20 controls the switching operation at the specific period. Though the antenna 301 can detects the contactless card and the converter 80 when being energized, the antenna 301 does not carry out a detection operation when in a not-energized state.

The touch panel display 50 includes a flat liquid crystal screen 501 and a touch panel 502. A transparent panel having an electronic polarization filter function is incorporated in the display screen of the liquid crystal screen 501. The polarization filter function partially functions at an area where the information having high security setting is displayed. The touch panel 502 is overlaid on the display screen of the liquid crystal screen 501, to synchronously detect a plurality of fingertips of users or pen points.

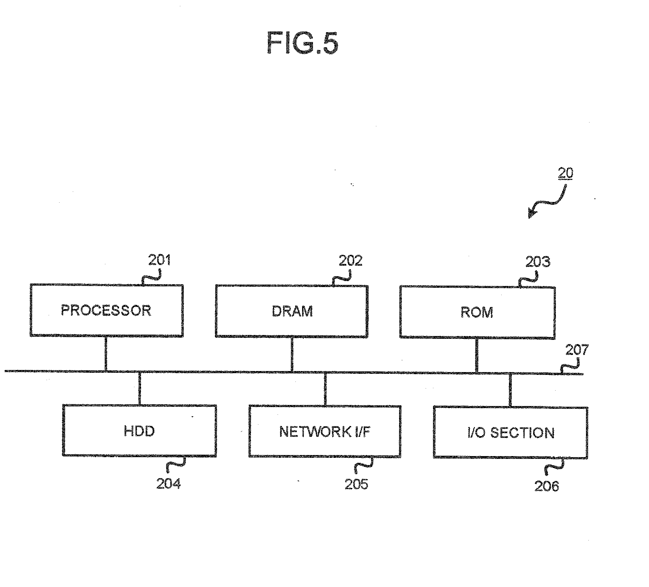

The contactless card reader 30 and the touch panel display 50 are connected with the control section 20. The reception control of the contactless card reader 30 and the display screen control and the operation control of the touch panel display 50 are carried out by the control section 20. The internal constitution of the control section 20 is illustrated with reference to the block diagram shown in Fig. 5. The control section 20, which is structurally identical to the existing computer, comprises a processor 201, a DRAM (Dynamic Random Access Memory) 202, a ROM (Read Only Memory) 203, a HDD (Hard disk drive) 204, a network I/F (Interface) 205 and an I/O (Input/Output) section 206 which send and receive data, input and output an instruction telegram and signal through a bus line 207.

The processor 201, which is a CPU (Central Processing Unit) in the present embodiment, expands the program pre-stored in the HDD 204 or the ROM 203 in the DRAM 202, and then executes operations according to the program to uniformly control each section. The DRAM 202 is a main storage device for storing data in a volatile manner and the ROM 203 stores a system program and the like in a nonvolatile manner. The HDD 204 stores the data of the user using the desk-top information processing apparatus 100 and the program used by the user.

The network I/F 205 is a device which is connected with the network 400 to carry out data transmission/reception with the machines outside the desk-top information processing apparatus 100. The communication carried out at this time may be wired communication or wireless communication. The I/O section 206 outputs the instruction signal and telegram from the processor 201 to the contactless card reader 30 and the touch panel display 50, inputs the telegram and signal of processing result from each unit, and moreover, inputs the data obtained from each unit.

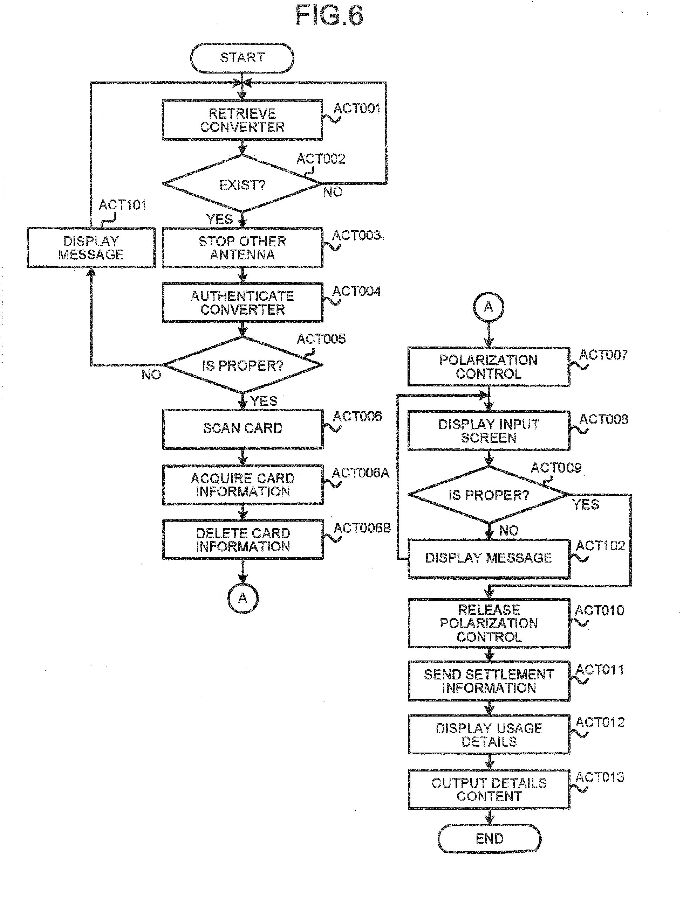

An example of operations carried out in the desk-top information processing apparatus 100 is described with reference to Fig. 6. The control in the flowchart in Fig. 6 is mainly carried out by the control section 20, and the processor 201 of the control section 20 expands the program pre-stored in the HDD 204 or the ROM 203 in the DRAM 202 and then executes the program to carry out the control in cooperation with other hardware. The flowchart shown in Fig. 6 is an example of carrying out a settlement processing using the converter 80.

The contactless card reader 30 retrieves whether or not the converter 80 is on the antenna 301 (ACT 001) . The retrieval is continuously carried out until the converter 80 is detected (loop of NO in ACT 002) . As there are two contactless card readers 30 in the present embodiment, the control section 20 carries out a control so that if one contactless card reader 30 is being energized, the other contactless card reader 30 is not energized, so that the two contactless card readers 30 will not interfere with each other.

If one contactless card reader 30 detects the converter 80 (YES in ACT 002), the control section 20 stops the operation of the other contactless card reader 30 (ACT 003).

The control section 20 authenticates whether or not the detected converter 80 is the pre-defined converter 80 (ACT 004) . For example, if the converter prepared by a malicious outsider is detected and used, and the settlement card of the customer is scanned, there is a possibility that the card information is read and divulged. Thus, it is determined in the present embodiment, before the card scanning processing, that whether or not the detected converter is the converter 80 defined to be used before. The converter authentication may be carried out by, for example, registering the code pre-registered in the storage area in the converter 80 in the ROM 203 or the HDD 204 of the control section 20 in advance, and comparing the two codes. Alternatively, the code may be converted into hash value, and the hash values are compared.

If the converter authentication is not proper (NO in ACT 005), the control section 20 controls the touch panel display 50 to display a message for notifying the user of the improper result (ACT 101), and then the flow returns to ACT 001. If the converter authentication is proper (YES in ACT 005), the control section 20 control the touch panel display 50 to display a message to urge the user to pass the card through the reading port 805, and the converter 80 reads the contacted card (ACT 006). The card information read by the converter 80 is output through the antenna 804 and the antenna 301 to the contactless card reader 30, and in this way, the control section 20 acquires the card information (ACT 006A). After the card information is output to the desk-top information processing apparatus 100, the converter 80 deletes the card information temporarily stored in the converter 80 (ACT 006B).

Next, the control section 20 controls the touch panel display 50 to display a screen for inputting the authentication information. In this case, a password number based on a PIN code is input if an IC chip is incorporated in the settlement card; alternatively, the authentication based on signature is carried out if no IC chip is incorporated.

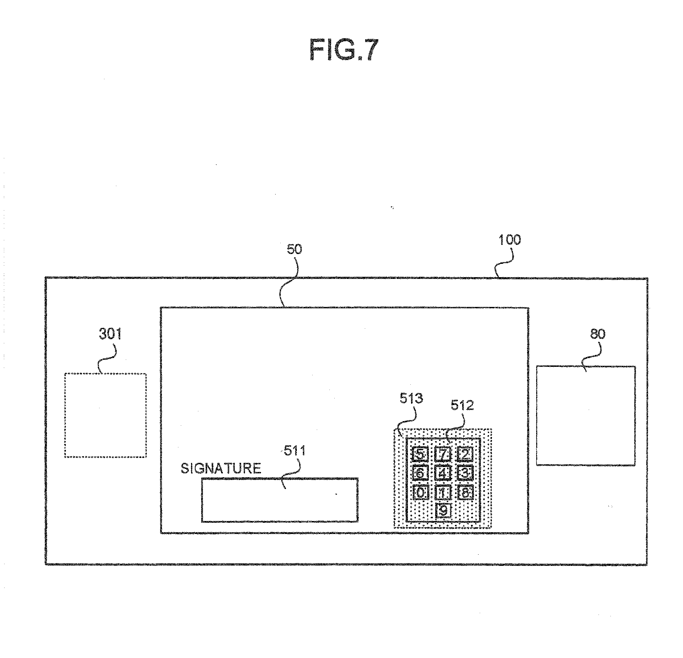

In a case where the authentication is carried out using the password number, the control section 20 controls the liquid crystal screen 501 to polarize part of the display area (ACT 007), display a signature entry column, and display a soft keyboard for inputting the password number in the polarized part area (ACT 008) . Fig. 7 is a top view illustrating a display state of the touch panel display 50 at this time. The liquid crystal screen 501 of the touch panel display 50 polarizes an area 513 and displays a soft keyboard 512 in the area 513. Though the method for partially polarizing the display screen is based on a conventional technology, if an area to be polarized is specified in advance, the polarization filter may be arranged only in the specified area, instead of the whole display area. The area 513 where the polarization filter function is effective is allowed to be viewed from a specified direction merely, and cannot be viewed form other directions. In the present embodiment, the polarization is arranged so that the area can be viewed by the customer only and cannot be viewed by other persons. The area where the polarization filter function is not effective can be viewed from all directions. Further, it is also applicable that the display area is completely, instead of partially, polarized in the customer direction. Though soft keys for pressing, for example 0∼9, are arranged in the soft keyboard 512, the display positions thereof are randomly arranged.

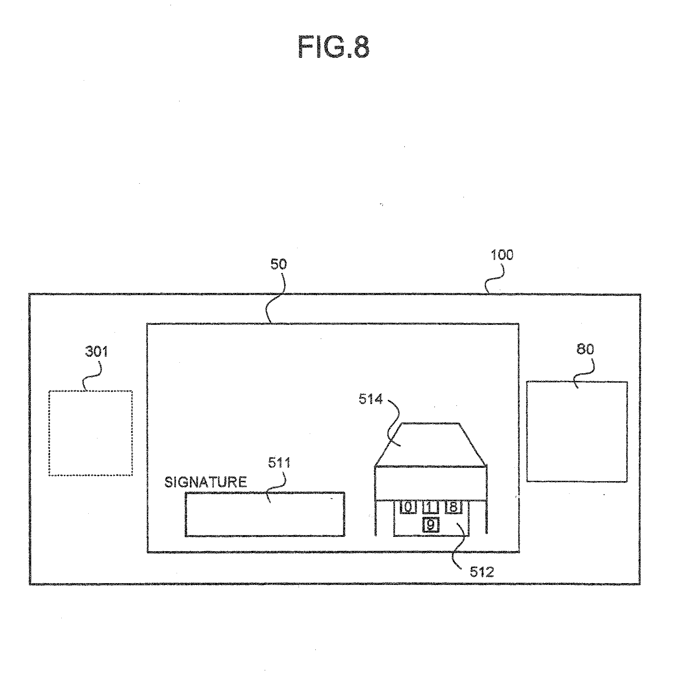

Further, as shown in Fig. 8, instead of the polarization control based on the liquid crystal screen 501, a blindfold hood 514 may also be used so that the movement of the hands cannot be seen from outside when the user inputs password. In this case, the blindfold hood 514 is arranged above the display area of the soft keyboard 512 so as to cover the display area. And in this case, the arrangement of each key of the soft keyboard 512 may be random or in sequential order.

On the other hand, the control section 20 displays the signature entry column 511 in an enlarged manner so that the customer can write more easily. Though the touch panel display 50 displays the signature entry column 511 and the soft keyboard 512 synchronously in Fig. 7 and Fig. 8, the present invention is not limited to this, it is also applicable that only one of the signature entry column 511 and the soft keyboard 512 required for the authentication is displayed.

The customer inputs the password number using the displayed soft keyboard 512, or carries out sign input in the signature entry column 511 using a dedicated pen and the like. The control section 20 determines whether or not the authentication information of the password number or the signature image is proper (ACT 009). The control section 20, if capable of acquiring a regular password number corresponding to the card information, or capable of comparing the signature input by the customer with the signature corresponding to the card information, is capable of carrying out the authentication processing and the proper determination automatically. On the other hand, if the control section 20 cannot carry out the authentication processing automatically, the following operations are carried out. The control section 20 operates the network I/F 205 and sends the card information and the password number (or the signature image) to the settlement system 2. The control section 20 receives the authentication result from the settlement system 2 and determines whether or not the authentication is proper according to the result. If the authentication is not proper (NO in ACT 009), the control section 20 displays a message indicating that the authentication is not proper on the touch panel display 50 (ACT 102), and then the flow returns to ACT 008.

If the authentication information is proper (YES in ACT 009), the control section 20 releases the polarization control (ACT 010), and operates the network I/F 205 to send the settlement information of the purchase items and the purchase amount to the settlement system 2 (ACT 011). That is, in ACT 009, the control section 20 controls whether or not to proceed to the settlement processing based on the card information. In this way, the settlement system 2 carries out the settlement processing. Further, the information of the purchase items and the information of the purchase amount is pre-stored in the store server 300 in an associated manner, and the control section 20 acquires the information from the store server 300. In addition, it is also applicable that the settlement processing is carried out only in the system 1 or only in the desk-top information processing apparatus 100, without using the settlement system 2.

If the settlement processing is completed, the control section 20 operates the touch panel display 50 to display the usage details of the current transaction (ACT 012). The signature image input in the signature entry column 511 may be reduced and included in the usage details.

The control section 20 operates the network I/F 205 to output the details content (ACT 013) . In a case of printing the details on paper, the control section 20 sends the details content to the MFP 200 through the network I/F 205, and the MFP 200 prints the details content. In a case of sending the details content to the terminals 500A∼500C held by the customer, the details content is sent to the terminal through the access point 401. The control section 20 may also upload the details content to a given server, and display a code (for example, a QR code) which can be identified by a machine and includes the link destination on the touch panel display 50. In this way, the customer can photograph the code to extract the link destination to acquire the details content. In addition, though the output business form may be the usage details as described in the present example, no specific limitation is given to the form of the output business form as long as it is a business form relating to the settlement processing, such as a receipt, a delivery statement, or a document recording the scheduled shipment date and the scheduled arrival date of a commodity.

In the example described above, though it is exemplified that the card information is acquired mainly through the converter 80, in a case of reading the contact-type card from the card reader 70, the flowchart shown in Fig. 6 starts from the processing in ACT 006. Further, in ACT 006, the card reader 70 reads the card.

Further, in a case where the contactless-type card is held over the antenna 301, the retrieval target in ACT 001 is the contactless-type card, instead of the converter 80. The converter authentication in ACT 004 and ACT 005 is not needed, and the flow proceeds to ACT 006 after carrying out the processing in ACT 003.

Though the credit card and the cash card are described as examples in the present embodiment, a charge type electronic money card may also be used. In this case, the information recorded in the card may be charging balance. The control section 20 determines, for example, whether or not the charging balance exceeds the commodity purchase amount so as to control whether or not to proceed to the settlement processing based on the charging balance. Further, the card includes a paper medium; and the reading section reads a barcode, a QR code, or a code character string written in numbers and alphabets recorded in the paper medium, and carries out character recognition as needed. The reading section in this case is a canner device including a barcode reader or a CCD image sensor.

In the present embodiment, the function for applying the present invention is pre-recorded in the apparatus. However, the present invention is not limited to this. Same function may be downloaded to the apparatus from a network. Alternatively, same function recorded in a recording medium may also be installed in the apparatus. The form of the recording medium is not limited as long as the recording medium can store programs like a CD-ROM and the like and is readable by an apparatus. Further, the function realized by an installed or downloaded program can also be achieved through the cooperation with an OS (Operating System) installed in the apparatus.

In accordance with the present embodiment, after a negotiation, a card settlement can be carried out on the spot, which improves the convenience.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

## Claims

1. A desk-top information processing apparatus, comprising:
a touch panel display configured to position a display screen thereof on the upper surface of a top plate of the desk-top information processing apparatus;
a reading section configured to read the information recorded in a card; and
a control section configured to control the display and the operation of the touch panel display, and control whether or not to proceed to a settlement processing based on the card information acquired by the reading section.

2. The desk-top information processing apparatus according to claim 1, wherein
the control section is configured to control to display, on the touch panel display, a screen for inputting authentication information corresponding to the card information acquired from the reading section, determine whether or not it is proper using the authentication information acquired from the touch panel display and the card information, and proceed to a settlement processing of the purchased commodity if it is determined to be proper.

3. The desk-top information processing apparatus according to claim 1 or 2, wherein
the reading section includes an antenna positioned on the upper surface of the top plate and a converter which is arranged on the antenna to read the card information when a card is contacted with a reading port of the converter.

4. The desk-top information processing apparatus according to claim 3, wherein
the control section is configured to determine whether or not the converter is a pre-registered converter based on a code pre-registered in the converter and a code pre-registered in the desk-top information processing apparatus.

5. The desk-top information processing apparatus according to any one of claims 1 to 4, wherein
the reading section includes an antenna positioned on the upper surface of the top plate, and reads the information of a card positioned on the antenna.

6. The desk-top information processing apparatus according to any one of claims 1 to 5, wherein
the reading section is a card reader which reads the card information when a card is contacted with the reading port.

7. The desk-top information processing apparatus according to any one of claims 2 to 6, wherein
the touch panel display is configure to polarize and display a display area including the screen for inputting the authentication information so that the display area can only be seen clearly by a user inputting the authentication information and cannot be seen from other directions.

8. The desk-top information processing apparatus according to any one of claims 2 to 7, wherein
the control section is configured to output a slip image relating to the settlement processing to an image forming apparatus.

9. The desk-top information processing apparatus according to any one of claims 2 to 8, wherein
the touch panel display is configured to display, if the authentication information is a password number, a keyboard on which single digits are arrayed randomly on the screen.

10. The desk-top information processing apparatus according to any one of claims 2 to 9, wherein
the touch panel display is configured to display, if the authentication information is a signature, a column for inputting a signature.
